# EUROPÄISCHE PATENTSCHRIFT

(11) **EP 4 381 003 B1**
(45) Veröffentlichungstag und Bekanntmachung des Hinweises auf die Patenterteilung: **30.07.2025**
(21) Anmeldenummer: 22777950.1
(22) Anmeldetag: 03.08.2022
(51) Int. Cl.: C08G 59/50, C08L 63/00, C08L 25/14, C08L 25/12, C08J 5/24, C08J 5/04, C08F 212/12, C08F 212/08

(54) **STRUKTURELLE TRANSPARENTE FASER-MATRIX-KOMPOSITE UND VERFAHREN ZUR DEREN HERSTELLUNG**
STRUCTURAL TRANSPARENT FIBER MATRIX COMPOSITES AND METHOD OF MAKING SAME
COMPOSITE STRUCTUREL TRANSPARENT À MATRICE DE FIBRES ET SON PROCÉDÉ DE FABRICATION

(30) Priorität: 05.08.2021 DE 102021120429
(43) Veröffentlichungstag der Anmeldung: 12.06.2024
(73) Patentinhaber: Universität Stuttgart, 70174 Stuttgart (DE)
(72) Erfinder: BUCHMEISER, Michael, 73630 Remshalden (DE); MIDDENDORF, Peter, 82131 Gauting (DE); CAYDAMLI, Yavuz, 70437 Stuttgart (DE); HEUDORFER, Klaus, 70567 Stuttgart (DE)
(74) Vertreter: Meissner Bolte Partnerschaft mbB
(86) Internationale Anmeldenummer: PCT/EP2022/071847
(87) Internationale Veröffentlichungsnummer: WO 2023/012226

(56) Entgegenhaltungen:
- EP-A1- 0 486 884
- EP-A1- 0 542 070
- WO-A1-2006/121706
- DE-A1- 2 229 129
- DE-A1- 2 934 352
- JP-A- H0 570 627
- KR-B1- 102 100 677
- ZOBEIRY NAVID ET AL: "Fabrication of transparent advanced composites", COMPOSITES SCIENCE AND TECHNOLOGY, vol. 197, 1 September 2020 (2020-09-01), AMSTERDAM, NL, pages 108281, XP093012225, ISSN: 0266-3538, DOI: 10.1016/j.compscitech.2020.108281
- DATABASE WPI Week 201875, 14 April 2020 Derwent World Patents Index; AN 2018-78375P, XP002808389
- DATABASE WPI Week 199317, 23 March 1993 Derwent World Patents Index; AN 1993-137096, XP002808390

## Beschreibung

Die Erfindung betrifft transparente Faser-Matrix-Komposite und insbesondere strukturelle transparente Faser-Matrix-Komposite, die aus einer polymeren Matrix und transparenten Verstärkungsfasern gebildet sind, wobei der Brechungsindex der polymeren Matrix dem der Verstärkungsfasern angeglichen ist und die Verstärkungsfasern im Verbund auch dadurch transparent werden, dass die Oberflächenrauheit durch die Benetzung mit der flüssigen Matrix kompensiert wird. Die Erfindung betrifft weiterhin Verfahren zur Herstellung solcher transparenter Faser-Matrix-Komposite und die Verwendung der beschriebenen Faser-Matrix-Komposite in transparenten Scheiben, die ballistischen Schutz aufweisen können.

### Stand der Technik

Faserverstärkte Polymerverbundwerkstoffe besitzen günstige mechanische Eigenschaften wie hohe Biege- und Zugfestigkeit, Steifigkeit sowie hohe Schlagfestigkeit in Kombination mit geringer Dichte (M. Tavakkolizadeh, H. Saadatmanesh, J. Compos. Constr. 2003, 7, 311-322; W. J. Cantwell, J. Morton, Composites 1991, 22, 347-362; H. L. Bos, J. Müssig, M. J. van den Oever, Compos. A: Appl. Sci. Manuf. 2006, 37, 1591-1604; W. Michaeli, M. Begemann (Hrsg) Einführung in die Technologie der Faserverbundwerkstoffe. Hanser, München 1990, 53; C. Stephen, B. Shivamurthy, M. Mohan, A.-H. I. Mourad, R. Selvam, B. H. S.

Thimmappa, Eng. Sci. 2022, 18, 75) In diesem Zusammenhang führt die Kombination verschiedener Arten von Fasern, die in eine geeignete Polymermatrix eingebettet sind, zu Verbundwerkstoffen mit Materialeigenschaften, die denen der Einzelkomponenten überlegen sind. Daher werden faserverstärkte Polymerverbundwerkstoffe in den Bereichen Leichtbau (C. E. Bakis, L. C. Bank, V. Brown, E. Cosenza, J. Davalos, J. Lesko, A. Machida, S. Rizkalla, T. Triantafillou, J. Compos. Constr. 2002, 6, 73), Automobilindustrie (J. Holbery, D. Houston, JOM 2006, 58, 80), Luft- und Raumfahrttechnik (C. Soutis, J. Mater. Sci. Eng. A 2005, 412, 171) sowie im Schiffbau (E. Gellert, D. Turley, Compos. A: Appl. Sci. Manuf. 1999, 30, 1259) eingesetzt.

Transparente, verstärkte Verbundwerkstoffe sind ebenfalls ein intensiv untersuchtes Forschungsfeld. Transparente, verstärkte Polymerverbundwerkstoffe sind für eine hohe mechanische Beanspruchung ausgelegt und weisen gleichzeitig die für verschiedene Anwendungen erforderliche optische Transparenz auf. Anwendungsmöglichkeiten für transparente Verbundwerkstoffe sind insbesondere hochschlagfeste Windschutzscheiben und leichte Panzerungen (M. Velez, W. R. Braisted, G. J. Frank, P. L. Phillips, D. E. Day, M. D. McLaughlin, J. Compos. Mater. 2011, 46, 1677), transparente Verbundwerkstoffe finden sich aber auch in der Optoelektronik (L. L. Beecroft, C. K. Ober, Chem. Mater. 1997, 9, 1302; S. Li, M. Meng Lin, M. S. Toprak, D. K. Kim, M. Muhammed, Nano Rev. 2010, 1, 5214; C.-L. Tsai, H.-J. Yen, G.-S. Liou, React. Funct. Polym. 2016, 108, 2), im UV-Schutz (B. Faure, G. Salazar-Alvarez, A. Ahniyaz, I. Villaluenga, G. Berriozabal, Y. R. De Miguel, L. Bergström, Sci. Technol. Adv. Mater. 2013, 14, 023001) sowie der Flammhemmung (H. Vahabi, O. Eterradossi, L. Ferry, C. Longuet, R. Sonnier, J.-M. Lopez-Cuesta, Eur. Polym. J. 2013, 49, 319). Die Verstärkung bietet nicht nur eine erhöhte mechanische Festigkeit, Steifigkeit und Schlagzähigkeit, sondern ermöglicht auch die Einstellung dieser Eigenschaften durch die Anisotropie der eingebundenen Verstärkungsmittel.

Weitgehend selbsttragende, dünne, optisch transparente, faserverstärkte Polymerfolien werden zur Herstellung von großen Displays als dünnere Alternative zu unverstärkten optisch transparenten Polymerfolien eingesetzt. Solche faserverstärkte Polymerfolien weisen eine erhöhte Steifigkeit auf, sodass ihre Struktur, verglichen mit unverstärkten Polymerfolien gleicher Dicke für größere Flächen formstabiler ist. Somit ist die Verformung aufgrund des Eigengewichts geringer (O. Benson Jr., N. G. Detwiler, P. R. Fleming, A. J. Ouderkirk, K. L. Thunhorst WO 2006/121706 A1, 3M innovative Properties Co.)

Um optisch transparent zu sein, muss das Matrixmaterial des Verbundwerkstoffs entweder nicht kristallin sein oder die Abmessungen der Kristallite, aus denen die Materialien bestehen, müssen kleiner sein als die Wellenlänge des sichtbaren Lichts (M. M. Bergshoef, G. J. Vancso, Adv. Mater. 1999, 11, 1362). Wenn die Dimensionen des nanoskaligen Additivs kleiner als ein Zehntel der Lichtwellenlänge sind, kann das Additiv das Licht nicht streuen und der Verbundwerkstoff ist optisch transparent, obwohl das Additiv teilkristallin ist (H. Yano, J. Sugiyama, A. N. Nakagaito, M. Nogi, T. Matsuura, M. Hikita, K. Handa, Adv. Mater. 2005, 17, 153). Alternativ muss das Verstärkungsmaterial des Verbundwerkstoffs (Partikel oder Fasern) im sichtbaren Spektrum (380 bis 750 nm) und relevanten Temperaturbereich den gleichen Brechungsindex wie die Matrixkomponente aufweisen. In diesem Fall wird das Licht nicht weiter gebrochen, wenn es durch das Verstärkungsmaterial tritt.

Bisher bestand der Hauptansatz zur Herstellung von transparenten Kompositmaterialien darin, die Polymermatrix mit kleinen Molekülen oder nanoskaligen Partikeln zu mischen. Der Gesamtbrechungsindex der Partikelgefüllten Polymermatrix wurde auch dadurch eingestellt, dass kleine Moleküle oder geeignete Comonomere auf die Partikel gepfropft wurden (J. Loste, J.-M. Lopez-Cuesta, L. Billon, H. Garay, M. Save, Prog. Polym. Sci. 2019, 89, 133-158). In D. J. Krug III, M. Z. Asuncion, V. Popova, R. M. Laine, Compos. Sci. Technol. 2013, 77, 95 werden S-Glasmatten-verstärkte Epoxy-Verbundwerkstoffe beschrieben, in denen der Brechungsindex der Epoxykomponente durch Einbezug erheblicher Mengen an polyhedrischen oligomeren Silsesquioxanen (POSS) dem Brechungsindex der S-Glasfasern angeglichen wurde. Das POSS ermöglicht hier eine leichte Einstellbarkeit des Brechungsindex über eine hohe Variabilität von im POSS gebundenen funktionellen Gruppen (M. Z. K. I. Asuncion, D.J., Abu-Seir, H.W., Laine, R.M., J. Ceram. Soc. Jpn. 2015, 123, 725; Y. Kagawa, H. Iba, M. Tanaka, H. Sato, T. Chang, Acta Mater. 1998, 46, 265). Nachteilig an dieser Vorgehensweise ist allerding der relativ hohe Anteil an POSS (mehr als 50 Gew.-% des gesamten verwendeten Polymers), der zur Abstimmung der Brechungsindices erforderlich war, da POSS nicht großtechnisch kommerziell verfügbar ist.

Eine weitere Möglichkeit stellt die Einstellung des Brechungsindex des MatrixPolymers auf die Verstärkungsfaser dar, wobei keine nicht reagierenden Komponenten beigemischt werden. In diesem Fall wird das transparente Faser-Polymer-Komposit beispielsweise aus Epoxid-funktionalisiertem Siloxan-Hybridharz (EPSH) mit E-Glasfasern (J. Jang, H.-G. Im, D. Lim, B.-S. Bae, Compos. Sci. Technol. 2021, 201, 108527), Epoxid und Polyurethan Harzsystemen mit E-Glasfasern (N. Zobeiry, A. Lee, C. Mobuchon, Compos. Sci. Technol. 2020, 197, 108281), ungesättigten Polyester Harzsystemen mit E-Glasfasern (S. R. Ahmed, S. Khanna, Heliyon 2020, 6, e03986) sowie Epoxid Harzsystemen mit S-Glasfasern gebildet (R. Meinders, D. Murphy, G. Taylor, K. Chandrashekhara, T. Schuman, Polym. Polym. Compos. 2021, 9, 826). Des Weiteren kann auch der Brechungsindex der Verstärkungsfasern auf die des Matrixpolymers abgestimmt werden. Z.B. von schmelzgesponnen Fasern aus BK10-Glas auf eine PMMA-Matrix (J. R. Olson, D. E. Day, J. O. Stoffer, J. Compos. Mater. 1992, 26, 1181; K. D. Weaver, J. O. Stoffer, D. E. Day, Polym. Compos. 1993, 14, 515). Die Herausforderung dabei ist das Erzielen eines hohen Faservolumenanteils bei für strukturelle Anforderungen typischen Komposit-Dicken und gleichzeitiger Erfüllung der optischen Anforderungen. Dies ist mit den oben genannten Materialen, Prozessen und Methoden nicht möglich, da hiermit nur gute optische Eigenschaften mit einem nicht strukturellen Komposit oder strukturelle Komposite mit unzureichenden optischen Eigenschaften realisierbar sind.

Ein kritischer Punkt bei der Verwendung von Nanopartikeln ist deren Agglomeration, was zu größeren Sekundärpartikeln führt, die dann Licht streuen. Darüber hinaus beeinflussen sowohl die Temperatur (H. Lin, D. E. Day, J. O. Stoffer, Polym. Eng. Sci. 1992, 32, 344; H. Lin, D. E. Day, J. O. Stoffer, Polym. Compos. 1993, 14, 402) als auch die relative Luftfeuchtigkeit den Brechungsindex (T. Watanabe, N. Ooba, Y. Hida, M. Hikita, Appl. Phys. Lett. 1998, 72, 1533). Im Allgemeinen verringert ein Temperaturanstieg den Brechungsindex des Polymers (T. Watanabe, N. Ooba, Y. Hida, M. Hikita, Appl. Phys. Lett. 1998, 72, 1533; D. H. Roy M. Waxler, and Albert Feldman, Appl. Opt. 1979, 18, 10). Auch können mit Nanopartikel-verstärkten Faser-Matrix-Kompositen nicht die mechanischen Festigkeiten und Steifigkeiten von Faser-verstärkten Kunststoffen erreicht werden.

Die DE 22 29 129 A1 offenbart transparente, glasfaserverstärkte Thermoplaste mit einer Polymermatrix auf der Basis von Polymethylmethacrylat und einem Copolymer auf der Basis von Styrol und Maleinanhydrid. In dem glasfaserverstärkten Thermoplast sind die Glasfasern in einer Menge von 35,7 bis 36,7 Gew.-% enthalten. Die beschriebenen Thermoplaste sollen eine gute bis sehr gute Transparenz aufweisen.

Die DE 29 34 352 offenbart einen Glasfaserverstärkten Gusskörper, in dem ein Copolymer aus Styrol, das mit Methylmethacvrlsäureester oder Acrylnitril copolymerisiert ist, verwendet wird. Die in DE 29 34 352 beschriebenen Gusskörper weisen einen Faseranteil von 25 Gew.-% auf, was einem Faservolumenanteil von weniger als 25% entspricht.

Die KR 2018 01081389 offenbart ein transparentes, Verstärkungsfasern enthaltendes Kompositmaterial, das eine Polycarbonat enthaltende Polymermatrix und Glasfasern in einer Menge im Bereich von 40, 60 oder 70 Gew.-% enthält. Die in KR 2018 01081389 angegebenen Verbundstoffe weisen einen Transmissionswert von 76 bis 87 % auf.

Die JPH 05 70627A offenbart eine transparente unbiegsame Platte für Sicherheitsverglasungen, die aus einem Glasfasergewebe und einem transparenten Harz gebildet ist. Als Harze, die in JP H05 70627A verwendet werden, sind Polymethylmethacrylat und Styrol-Acrylonitril Copolymere genannt. Der Brechungsindex des Harzes wurde über die Einstellung der Verhältnisse der Polymere eingestellt.

Vor diesem Hintergrund besteht ein Bedarf für strukturelle, transparente Faser-Matrix-Komposite, die sich aus kommerziell verfügbaren Ausgangsmaterialien herstellen lassen und für deren Herstellung keine schwierig herzustellenden Komponenten benötigt werden. Darüber hinaus besteht ein Bedarf nach vereinfachten Herstellungsverfahren für solche Faser-Matrix-Komposite. Die benötigten strukturellen, transparenten Faser-Matrix-Komposite erfordern dabei eine hohe Transmission und geringe Streuung des Lichts im sichtbaren Spektrum bei gleichzeitig möglichst hohem Faservolumenanteil, sowie eine nicht messbare Porosität (durch herstellungsbedingte Lufteinschlüsse im Komposit). Die vorliegende Erfindung befasst sich mit diesem Bedarf.

### Beschreibung der Erfindung

In den dieser Erfindung zugrundeliegenden Untersuchungen wurde überraschend gefunden, dass transparente und insbesondere strukturelle transparente Faser-Matrix-Komposite aus Verstärkungsfasern aus amorphem Material und Matrixmaterialien aus einem amorphen Polymer gemäß den Vorgaben in Anspruch 1 hergestellt werden können, in dem der Komposit unter möglichst weitgehendem Gasausschluss durch Verpressen der Verstärkungsfasern und des Matrixmaterials über der Erweichungstemperatur des Matrixmaterials hergestellt wird. Alternativ kann ein transparenter oder struktureller transparenter Faser-Matrix-Komposit durch *in-situ* Polymerisation von Gemischen von Verstärkungsfasern und Polymervorläufern unter weitgehendem Gasausschluss hergestellt werden. Die so erhaltenen transparenten und strukturellen transparenten Faser-Matrix-Komposite zeichnen sich durch eine hohe Transparenz, bestimmt als normalisierte Transmission bei einer Wellenlänge von 589 nm bei 20 °C von mindestens 60 %, aus, wobei ein Zusatz von polyhedrischen oligomeren Silsesquioxanen (POSS) nicht erforderlich ist. Der transparente Faser-Matrix-Komposit weist einen Volumenanteil der Faser von mindestens 25 Vol.-% bis 60 Vol.- -% auf.

Gemäß einem ersten Aspekt betrifft die vorliegende Erfindung demzufolge einen transparenten Faser-Matrix-Komposit und bevorzugt einen strukturellen transparenten Faser-Matrix-Komposit, der Verstärkungsfasern aus einem amorphen Material und ein die Verstärkungsfasern einschließendes Matrixmaterial aus einem amorphen Polymer gemäß den Vorgaben in Anspruch 1 umfasst, wobei das Matrixmaterial einen Siliziumgehalt von weniger als 2 Gew.-% und der transparente Faser-Matrix-Komposit eine normalisierte Transmission, bestimmt bei 589 nm, von mindestens 60 % aufweist.

"Amorph" bezeichnet im Kontext der hier beschriebenen Erfindung ein nicht kristallines Material und ein Material, dass Abmessungen von in dem Material vorliegenden Kristalliten aufweist, die kleiner als die Wellenlänge des sichtbaren Lichts sind. "Sichtbares Licht" bezeichnet den Wellenlängenbereich von 380 bis 750 nm.

Nach den im Abschnitt "Stand der Technik" geschilderten Sachverhalten weisen das Material der Verstärkungsfasern und das Matrixmaterial Brechungsindizes auf, die möglichst weitgehend aneinander angeglichen sind. Die Brechungsindizes werden dazu bei einer Temperatur von 20 °C bei 589 nm (Natrium D-Line) bestimmt. Die Brechungsindizes des Materials der Verstärkungsfasern und des Matrixmaterials unterscheiden sich um maximal 0,02, bevorzugt um maximal 0,01, eiter bevorzugt um maximal 0,001 und noch weiter bevorzugt um maximal 0,0002.

Im Kontext der hier beschriebenen Erfindung erfolgt die Abstimmung dieser Brechungsindizes über die Auswahl eines passenden Matrixmaterials, wobei auf siliziumhaltige Bestandteile wie polyhedrisches oligomeres Silsesquioxane weitgehend verzichtet wird. Entsprechend enthält der transparente und strukturelle transparente Faser-Matrix-Komposit gemäß der Erfindung einen maximalen Anteil an Silizium und/oder polyhedrischen oligomeren Silsesquioxanen von 2 Gew.-% oder weniger, und bevorzugt 1 Gew.-% oder weniger, noch bevorzugter 0,5 Gew.-% oder weniger. Ganz besonders bevorzugt ist es, wenn das Matrixmaterial mit Ausnahme von unvermeidlichen Verunreinigungen kein Silizium enthält. Der Siliziumanteil bezeichnet dabei dasjenige Si, dass im Matrixmaterial enthalten ist, und kein eventuell aus den Verstärkungsfasern (z.B. Glasfasern) stammendes Si. Hohe Siliziumgehalte im Matrixmaterial lassen sich in der Regel nur mit hohen Anteilen an siliziumorganischen Verbindungen realisieren, die im Kontext der hier beschriebenen Erfindung nicht erforderlich sind und auf die zu Gunsten vertretbarer Kosten des Endprodukts verzichtet werden soll.

Fasern sind im Kontext der hier beschrieben Erfindung Stränge mit einem im Wesentlichen runden, elliptischen oder rund abgeplatteten Querschnitt (Aspektverhältnis im Bereich von 1:5 bis 5:1, bevorzugt 1:3 bis 3:1 und weiterbevorzugt 1:2 bis 2:1). Die Fasern werden vorzugsweise als Endlosfasern eingesetzt, und weisen zweckmäßig einen Durchmesser im Bereich von 3 bis 25 µm auf.

Als Verstärkungsfasern werden in den erfindungsgemäßen Faser-Matrix-Kompositen bevorzugt Garne, Hybridgarne und daraus hergestellte Gelege, Gewebe, Geflechte, Gestricke, Gewirke, Filze, Vliese oder Wirrfasermatten verwendet. "Hybridgarne" bezeichnen dabei Garne, die aus den Verstärkungsfasern und Matrixmaterial gebildet sind, in dem die Verstärkungsfasern in einem Sekundärspinnprozess mit dem Matrixmaterial versponnen werden. Aus diesen Faserhalbzeugen wird über direkte (Weben, Flechten, Tailored Fiber Placement (TFP), Fiber Patch Placement (FPP), Automated Tape Laying (ATL), Automated Fiber Placement (AFP), Dry Fiber Placement (DFP), etc.) und/oder sequenzielle (z.B Einzel- oder Mehrlagendrapierung von vernähten und unvernähten Faser/Textilstapeln über ein- oder mehrteilige Stempelprozesse bzw. Membranverfahren) Textilverarbeitungsprozesse ein "Preform" konturnah zur Bauteilgeometrie hergestellt. Dabei dürfen keine beim "Preforming" oft üblichen Binder, lokal aufgetragene Klebstoffe in Form von thermoplastischer Schmelze oder Pulver, Garne bzw. Vliese (scrim-bonding) oder reaktive Klebstoffe (chemical stitching), deren Brechungsindex von dem der Verstärkungsfaser und der Matrix abweicht, eingesetzt werden. Bei Vernähungen muss darauf geachtet werden, dass der Brechungsindex der Nähfäden auf den der Verstärkungsfaser und der Matrix abgestimmt ist.

Bei dem Material der Verstärkungsfasern kann es sich um jegliches Material handeln, das zu Fasern verarbeitet werden kann und in diesem Zustand amorph vorliegt. Ein besonders geeignetes Material für die Verstärkungsfasern ist Glas, ganz besonders bevorzugt ist E-Glas oder S-Glas. In einer anderen Ausführungsform ist S-Glas als Material der Verstärkungsfasern ausgeschlossen.

Bei dem das Matrixmaterial bildenden amorphen Polymer handelt es sich erfindungsgemäß um ein Copolymer, Terpolymer oder Quaterpolymer, dessen Zusammensetzung so auf das Material der Verstärkungsfasern abgestimmt ist, dass sich möglichst weitgehend angeglichene Brechungsindices ergeben. Bausteine, die eine solche Abstimmung erlauben sind z.B. aromatische Vinylmonomere wie Styrol und Vinyl- oder Acrylmonomere. Für die Zwecke der vorliegen Erfindung besonders geeignete amorphe Polymere, die entsprechend das Matrixmaterial für die erfindungsgemäßen transparenten oder strukturellen transparenten Faser-Matrix-Komposite bilden, sind aus zwei oder mehr Monomeren gebildet, die ausgewählt sind aus Styrol, Methylmethacrylat, Ethylmethacrylat, Butylmethacrylat, N,N-Dimethylacrylamid, Glycidylmethacrylat, Acrylnitril, Methacrylsäure, Methacrylamid, Tetrahydrofurfurylmethacrylat, Isopropenylacetat N-Vinylpyrrolidon, Vinylacetat und Vinylpropionat. Bevorzugt ist das amorphe Polymer des Matrixmaterials mit Styrol als Monomer gebildet.

Besonders bevorzugt sind Copolymere auf Basis von Styrol und Methylmethacrylat, Styrol und Ethylmethacrylat, Styrol und N,N-Dimethylacrylamid, Styrol und Acrylnitril, oder N-Vinylpyrrolidon und Vinylacetat, da solche Polymere so hergestellt werden können, dass ihr Brechungsindex bei Raumtemperatur exakt einer Verstärkungsfaser als Glas entspricht. Ganz besonders bevorzugt als Matrixpolymere sind Copolymere von Styrol und Methylmethacyrlat, Ethylmethacrylat, N,N-Dimethylacrylamid oder Acrylnitril, oder Ter- oder Quarterpolymere von Styrol und zwei oder drei dieser Monomeren.

Das amorphe Polymer weist zweckmäßig ein für eine spätere Verarbeitung und zur Vermittlung einer für das Faser-Matrix-Komposit gewünschten Festigkeit geeignetes Molekulargewicht auf. Bevorzugt sind hierfür amorphe Polymere mit einem Molekulargewicht im Bereich von 10,000 bis 1,000,000 g/mol, vorzugsweise von 50,000 bis 500,000 g/mol, und besonders bevorzugt zwischen von 100,000 bei 250,000 g/mol. Das Molekulargewicht wird hierbei mittels GPC über Verwendung geeigneter Standards bestimmt, wie im Beispielteil beschrieben.

Für eine Verarbeitung, beispielsweise mittels Verspinnen, ist es weiterhin bevorzugt, wenn das amorphe Polymer eine Nullscherviskosität zwischen 100 und 10000 Pa·s, vorzugsweise zwischen 250 und 2500 Pa·s, und besonders bevorzugt zwischen 400 und 1000 Pa·s aufweist. Die Nullscherviskosität wird dabei oszillatorisch zwischen 160 °C und 250 °C nach DIN 51810-2 bestimmt. Zusätzlich oder alternativ weist das amorphe Polymer vorzugsweise einen Verlustfaktor δ ≥ 1 auf.

Für die Herstellung von erfindungsgemäßen transparenten oder strukturellen transparenten Faser-Matrix-Kompositen mit Hilfe beispielsweise eines Heißpressprozesses ist es erforderlich, dass das amorphe Polymer für das Pressen hinlänglich erweicht werden kann, um das Polymer verformen zu können. Demzufolge weist das amorphe Polymer bevorzugt eine Glasübergangstemperatur Tg, bestimmt mittels DSC (wie im Beispielteil beschrieben), im Bereich von 50 bis 300 °C, insbesondere im Bereich von 60 bis 200 °C, und besonders bevorzugt von 80 bis 130 °C auf.

Im Rahmen der dieser Erfindung zugrundeliegenden Untersuchungen konnte ebenfalls überraschend festgestellt werden, dass Faser-Matrix-Komposite mit hoher Transparenz auch durch *in-situ* Polymerisation von Mischungen geeigneter Monomere in Gegenwart der Verstärkungsfasern hergestellt werden können.

In den erfindungsgemäßen transparenten Faser-Matrix-Kompositen sind die Verstärkungsfasern mit einem Anteil von 25 bis 60 Vol.-% enthalten, wobei ein Anteil von x 40 bis 60 Vol.-% bevorzugt und ein Anteil von 50 bis 60 Vol.-% weiter bevorzugt ist, und wobei der Anteil jeweils auf das Gesamtgewicht des Faser-Matrix-Komposits bezogen ist. In einer bevorzugten Ausführungsform enthält der erfindungsgemäße Faser-Matrix-Komposit mindestens 30 Vol.-%, z.B. 30 bis 60 Vol.-% oder mindestens 50 Vol.-%, z.B. 50 60 Vol.-%, Verstärkungsfasern. In einer weiteren bevorzugten Ausführungsform enthält der transparente Faser-Matrix-Komposit mindestens 40 Vol.-% Verstärkungsfasern, d.h. z.B. 45-55 Vol.-% Verstärkungsfasern oder 55-60 Vol.-%, wobei letzteres eine besonders bevorzugte Ausgestaltung des erfindungsgemäßen Faser-Matrix-Komposits darstellt.

Wie vorstehend erwähnt weist der erfindungsgemäße strukturelle transparente Faser-Matrix-Komposit eine normalisierte Transmission von mindestens 60 % (bestimmt bei 20 °C und 589 nm) auf. Bevorzugt ist eine normalisierte Transmission von 70 % oder mehr, insbesondere von 80 % oder mehr, weiter bevorzugt von 90 % oder mehr und noch weiter bevorzugt von 95 % oder mehr. Die "normalisierte" Transmission wird dabei bestimmt gemäß der Formel "Normalisierter Transmissionswert = Transmissionswert Komposit/Transmissionswert Matrixpolymer * 100", wobei die Transmissionswerte jeweils bei 589 nm und 20 °C zu bestimmen sind.

Da ein höherer Verstärkungsfaseranteil im Komposit in der Regel mit einer geringeren Transmission verbunden ist, ist es weiterhin bevorzugt, wenn der Faser-Matrix-Komposit bei einem Faseranteil von etwa 60 Vol.-% eine normalisierte Transmission von mindestens 70 % und insbesondere mindestens 80 % aufweist. Für einen Faser-Matrix-Komposit mit einem Faseranteil von etwa 25 Vol.-% ist es bevorzugt, wenn er eine normalisierte Transmission von mindestens 80 % und insbesondere mindestens 90 % aufweist. Für einen Faser-Matrix-Komposit mit einem Faseranteil von etwa 12 Vol.-% ist es bevorzugt, wenn er eine normalisierte Transmission von mindestens 80 % und insbesondere mindestens 90 %, und weiter bevorzugt von mindestens 95 % aufweist.

Für den erfindungsgemäßen transparenten Faser-Matrix-Komposit und insbesondere den erfindungsgemäßen strukturellen transparenten Faser-Matrix-Komposit ist es weiterhin bevorzugt, wenn er eine nicht messbare Porosität aufweist, so dass gegebenenfalls vorhandene Lufteinschlüsse einen maximalen Durchmesser von weniger als 38 nm aufweisen.

Ein zweiter Aspekt der vorliegenden Erfindung betrifft Verfahren zur Herstellung von transparenten und bevorzugt strukturellen transparenten Faser-Matrix-Kompositen, wie sie im vorstehenden beschrieben wurden.

In einer Ausführungsform umfasst ein solches Verfahren ein Pressen des amorphen Polymers in Gegenwart der Verstärkungsfasern bei einer Temperatur oberhalb der Glasübergangstemperatur des amorphen Polymers. Bei dieser Temperatur erweicht das amorphe Polymer und wird in die Zwischenräume der Verstärkungsfasern gedrückt, die von dem Polymer vollständig ausgefüllt werden. Das Pressen bei einer Temperatur oberhalb der Glasübergangstemperatur des amorphen Polymers wird im Rahmen der hier beschriebenen Erfindung auch als Heißpressen bezeichnet.

Für dieses Verfahren ist es besonders bevorzugt, wenn der Faser-Matrix-Komposit in einem zweistufigen Verfahren hergestellt wird, wobei das amorphe Polymer in einem ersten Schritt mit Hilfe einer Heißpresse in Folienform gepresst wird und in einem zweiten Schritt die Verstärkungsfasern in einer oder mehreren Lagen zwischen zwei wie im ersten Schritt hergestellte Polymerfolien gelegt und mit einer Heißpresse unter Vakuum zu einem Komposit gepresst wird. In diesem Verfahren wird demzufolge in einem ersten Schritt ein Vorprodukt ohne Verstärkungsfasern hergestellt, und die Verstärkungsfasern werden erst in einem zweiten Schritt in das Produkt eingebracht.

Alternativ kann ein erfindungsgemäßer Faser-Matrix-Komposit über ein *in-situ* Verfahren hergestellt werden, indem die Verstärkungsfasern mit Monomeren oder Oligomeren des zu erzeugenden amorphen Polymers vermischt werden und das amorphe Polymer anschließend durch Polymerisation der Monomeren oder Oligomeren gebildet wird. Beschrieben wird daher auch ein Verfahren zur Herstellung eines erfindungsgemäßen transparenten und bevorzugt strukturellen transparenten Faser-Matrix-Komposits, wobei Verstärkungsfasern in einer fließfähigen Mischung von ein oder mehreren monomeren und/oder oligomeren Vorläufern des amorphen Polymers vorgelegt wird und der Faser-Matrix-Komposit anschließend durch Polymerisation der Vorläufer erzeugt wird.

Das erwähnte Verfahren zur Herstellung eines erfindungsgemäßen transparenten und bevorzugt strukturellen transparenten Faser-Matrix-Komposits ist vorzugsweise so ausgestaltet, dass eine Preform aus den Verstärkungsfasern in ein zweiseitiges Formwerkzeug eingelegt wird, dessen Kavitätswände aus hochpoliertem Metall, Mineralglas-, Polycarbonat-, Methylmethacrylat- oder einer Polymerplatte mit abgestimmtem Brechungsindex bestehen. Die fließfähige Mischung (Reaktionssystem) kann durch Evakuieren der Kavität in die Zwischenräume der Preform infiltriert werden, wobei dieser Vorgang gegebenenfalls durch Bedrücken der Reaktionssystemzuführung unterstützt werden kann. Das Kavitätswandmaterial kann dabei integraler Teil des strukturellen transparenten Faser-Matrix-Komposits werden oder die Kavitätswände eine Beschichtung mit einem Trennmittel aufweisen, die eine Anhaftung der fließfähigen Mischung unterbinden.

Beschrieben, aber nicht als erfindungsgemäß beansprucht, wird weiterhin ein Verfahren zur Herstellung eines Faser-Matrix-Komposit-Hybridgarns, wobei das Verfahren die Schritte:
i) Erzeugen von Fasern aus einem amorphen Polymer, wobei die Fasern eine Siliziumgehalt von weniger als 10 Gew.-% aufweisen, über ein Primärspinnverfahren, und
ii) Erzeugen eines Hybridgarns aus den Fasern des amorphen Polymers und Verstärkungsfasern mittels Sekundärspinnen, umfasst.

Im Schritt i) werden in diesem Verfahren zunächst Primärfasern erzeugt, die aus dem amorphen Polymer gebildet sind. Dieser auch als Primärspinnverfahren bezeichnete Schritt kann mit jedem zum Verspinnen von Polymeren geeigneten Verfahren durchgeführt werden, wobei das Primärspinnverfahren bevorzugt ausgewählt ist aus Nassspinnen, *air-gap* Spinnen, Schmelzspinnen, Gelspinnen oder Trockenspinnen. In einem zweiten Schritt werden die so hergestellten Fasern dann mit den Verstärkungsfasern zu einem Hydridgarn versponnen.

Beschrieben, aber nicht als erfindungsgemäß beansprucht, wird weiterhin ein Faser-Matrix-Komposit-Hybridgarn, dass nach einem solchen Verfahren hergestellt wurde. Ein solches Garn enthält aus dem amorphen Polymer gebildete Fasern und Verstärkungsfasern, die zu einem Garn verbunden sind.

Beschrieben, aber nicht als erfindungsgemäß beansprucht, wird weiterhin ein Verfahren zur Herstellung eines wie vorstehend beschrieben transparenten und bevorzugt strukturellen transparenten Faser-Matrix-Komposits, wobei das Verfahren ein Pressen von Faser-Matrix-Komposit-Hybridgarn, wie vorstehend beschrieben, bei einer Temperatur oberhalb der Glasübergangstemperatur des amorphen Polymers im Hybridgarn beinhaltet.

Im Rahmen des Verfahrens kann es zweckmäßig sein, wenn aus einem Hybridgarn zunächst eine Preform (konfektionierte Faserverstärkung mit der Zielkontur oder sogar bereits der Zielgeometrie) hergestellt wird. Dies kann z.B. durch eine direkte Verarbeitung des Garns über ein Faserablegeverfahren, z.B. über Tailored Fibre Placement (TFP) oder ein Stickverfahren oder über ein herkömmliches Preforming Verfahren (sh. z.B. Neitzel, M., Mitschang, P., and Breuer, U. 2014. Handbuch Verbundwerkstoffe. Werkstoffe, Verarbeitung, Anwendung. Carl Hanser Fachbuchverlag, s.l. Kapitel 4, Seite 95) erfolgen, bei dem zunächst ein Textil aus dem Hybridgarn hergestellt wird.

Im Unterschied zum Folien-Heißpressverfahren liegt beim Hybridgarn-Heißpressen bereits eine homogenere Verteilung der Matrix innerhalb der Faserverstärkung vor, sodass die erforderlichen Fließwege für das fließfähige Matrixpolymer geringer sind. Weiterhin findet die Fließbewegung zunächst innerhalb der Hybridgarne und anschließend aus diesen heraus in die Zwischenräume der Preform statt. Beim Folien-Heißpressen findet die Fließbewegung zunächst in die Zwischenräume der Preform und anschließend in die Garne der Verstärkungsfaser statt.

In den beschriebenen Verfahren ist es zum Ausschluss von Gaseinschlüssen, die die Transparenz des Komposits beeinträchtigen können, zweckmäßig, wenn das Pressen unter vermindertem Druck, vorzugsweise bei einem Vakuum von weniger als 200 mbar, weiter bevorzugt weniger als 50 mbar und noch weiter bevorzugt weniger als 10 mbar durchgeführt wird. Im Fall der Herstellung von Faser-Matrix-Kompositen über ein *in-situ* Verfahren ist in diesem Zusammenhang ein Vakuumassistiertes Harzinjektionsverfahren besonders vorteilhaft, da damit störende Luftblasen im hergestellten Faser-Matrix-Komposit weitgehend ausgeschlossen werden können. Demzufolge wird im Rahmen dieses Verfahrens das Gemisch aus Verstärkungsfasern und einem der mehreren monomeren und/oder oligomeren Vorläufern des amorphen Polymers oder die jeweiligen Einzelkomponenten vorzugsweise bei einem geringeren Druck als dem Injektionsdruck bei gleicher Temperatur entgast. Der partielle Gasdruck gelöster Stoffe ist dabei vom Druck des Systems, also dem Absolutdruck im Vakuumaufbau bzw. in der Kavität des Formwerkzeugs abhängig. Damit sichergestellt ist, dass bei der Infusion kein Ausgasen von gelösten Stoffen stattfindet, sollte der Absolutdruck beim Entgasen möglichst geringer sein als bei der Infusion. Der partielle Gasdruck ist weiterhin von der Temperatur abhängig, d.h. die Temperatur des Harzsystems sollte beim Entgasen der Temperatur bei der Infiltration entsprechen.

Beinhaltet das erfindungsgemäße Verfahren ein "Heißpressen" oder ein Pressen bei einer Temperatur oberhalb der Glasübergangstemperatur des amorphen Polymers, so erfolgt dieses Pressen bevorzugt bei einer Temperatur von mindestens 20 °C, insbesondere mindestens 50 °C und weiter bevorzugt mindestens 80 °C oberhalb der Glasübergangstemperatur des amorphen Polymers. Als mögliche Obergrenze für die Temperaturdifferenz kann eine Temperaturdifferenz von 150 °C angegeben werden. Die Temperatur ist in jedem Fall so abgestimmt, dass sich die Materialien der Verstärkungsfasern und des amorphen Polymers unter den Verarbeitungsbedingungen nicht zersetzen.

In einem weiteren Aspekt betrifft die vorliegenden Erfindung nach den im vorstehenden beschrieben Verfahren hergestellte Faser-Matrix-Komposite.

Die hier beschriebenen transparenten und strukturellen transparenten Faser-Matrix-Komposite kombinieren die Vorteile von einerseits einer hohen Transparenz und andererseits von erhöhter Festigkeit und Bruchsicherheit, wie sie bekannte Faser-Matrix-Komposite im Vergleich zu den Einzelmaterialien aufweisen. Diese Eigenschaften sind für Anwendungen mit ballistischem Schutz von großem Vorteil. Demzufolge betrifft die vorliegende Erfindung in einem weiteren Aspekt die Verwendung eines transparenten und bevorzugt strukturellen transparenten Faser-Matrix-Komposits, wie vorstehend beschrieben, als transparente Scheibe mit ballistischem Schutz.

Die Scheiben sind vor allem auch für den Leichtbau struktureller Anwendungen interessant. Ein erfindungsgemäßer transparenter und bevorzugt transparenter struktureller Faser-Matrix-Komposit, der Glasfasern enthält, kann z.B. die Anforderungen, die ein Mineralglas oder eine unverstärkte Polymerscheibe erfüllt, bei deutlich geringerem Gewicht erfüllen. Darüber hinaus reduzieren sich die Anforderungen an die umgebende Struktur, falls eine Scheibe als tragendes Element, d.h. als lasttragende Struktur intergiert werden kann.

Der vorliegenden Erfindung liegt zudem die überraschende Erkenntnis zu Grunde, dass die Abstimmung des Brechungsindex des Matrixmaterials auf den Brechungsindex von Verstärkungsfasern, z.B. aus Glas, mit aus aromatischen Vinylpolymeren und Vinyl- oder Acrylmonomeren möglich ist, während auf Siliziumhaltige Komponenten, wie POSS, verzichtet werden kann. Demzufolge betrifft ein noch weiterer Aspekt der vorliegenden Erfindung die Verwendung eines Gemischs eines aromatischen Vinylpolymers und eines Vinyl- oder Acrylmonomers zur Abstimmung des Brechungsindex eines aus der Polymerisation dieser Monomere resultierenden Polymers auf den Brechungsindex eines Fasermaterials, wobei der Brechungsindex über die Einstellung des Verhältnisses von aromatischem Vinylpolymer und Vinyl- oder Acrylmonomer eingestellt wird. die Angabe "Acrylmonomer" umfasst hier Monomere der Acryl- und Methacrylsäure, sowie die bekannten Derivate hiervon. Die Anpassung der Brechungsindizes von Polymer und Verstärkungsfaser erfolgt dabei mit einer maximalen Abweichung von ± 0,001 bei 589 nm und 20 °C.

Im Folgenden wird die vorliegende Erfindung anhand einiger Beispiele näher illustriert, die jedoch nicht als in irgendeiner Weise beschränkend für den Schutzumfang der Anmeldung verstanden werden sollten.

### Beispiele:

Für die Analyse und Bewertung der hergestellten Produkte wurden nachfolgend die folgenden Verfahren verwendet, auf die als Referenz für die Bestimmung der Parameter im gesamten Kontext der Anmeldung verweisen wird.

GPC Messungen wurden in CHCl₃ bei 40 °C aufgenommen. Die Molekulargewichte wurden mittels Kalibrierung gegen Polystyrolstandards ermittelt. Das GPC System bestand aus einer PSS SDV 5 µm 8 x 50 mm Vorsäule, drei konsekutiven PSS SDV 100 000 Å 5 µm 8 x 50 mm Säulen und einem Agilent 1200 Series G1362A Modul mit Brechungsindexdetektor. Die Konzentration der Proben betrug 3 mg/mL; die Flussrate betrug 1 mL/min.

DSC Messungen wurden unter Stickstoff (20 mL/min) auf einem DSC Q2000 von TA Instruments Inc. unter Verwendung einer Heizrate von 10 K/min in einem Temperaturbereich von 0 °C bis 200 °C durchgeführt. Zur Analyse wurden der 2. Bzw. 3. Heizzyklus herangezogen.

Rheologische Untersuchungen zur Bestimmung der Nullscherviskosität wurden oszillatorisch zwischen 160 °C und 250 °C durchgeführt.

### Beispiel 1: Poly(styrol)-co-poly(methylmethacrylat)

0,08 g (0,05 eq.) AIBN, 5,54 g (5,32 eq.) Styrol sowie 3,650 g (3,65 eq.) Methylmethacrylat wurden in ein 10 mL Reaktionsgefäß aus Glas, versehen mit einem Septum, gegeben. Dieses wurde verschlossen und die Mischung 5 Minuten gerührt. Nachdem das Septum mit einer Nadel zum Entweichen des Stickstoffs perforiert wurde, wurde das Reaktionsgefäß für 8 Stunden bei 65 °C in ein Ultraschallbad gegeben. Danach wurde das Polymer aus dem Reaktionsgefäß entfernt und am Vakuum getrocknet. Ausbeute: 8,9 g (≈ 97 %). *T_{g}* ≈ 101 °C, *Mₙ =* 120,000 g/mol, *Ð =* 3,0. [η₀] = 550 Pa·s. Das Copolymer war geeignet für das Schmelzspinnen.

### Beispiel 2: Poly(styrol)-co-poly(ethylmethacrylat)

0,08 g (0,05 eq.) AIBN, 5,57 g (5,32 eq.) Styrol sowie 3,51 g (3,08 eq.) Ethylmethacrylat wurden in ein 10 mL Reaktionsgefäß aus Glas, versehen mit einem Septum, gegeben. Dieses wurde verschlossen und die Mischung 5 Minuten gerührt. Nachdem das Septum mit einer Nadel zum Entweichen des Stickstoffs perforiert wurde, wurde das Reaktionsgefäß für 8 Stunden bei 65 °C in ein Ultraschallbad gegeben. Danach wurde das Polymer aus dem Reaktionsgefäß entfernt und am Vakuum getrocknet. Ausbeute: 8,96 g (≈99 %). *T_{g}* ≈ 84 °C, *Mₙ* = 115,000 g/mol, *Ð* = 3,0. [η₀] = 612 Pa·s. Das Copolymer war geeignet für das Schmelzspinnen.

### Beispiel 3: Poly(styrol)-co-poly(N,N-dimethylacrylamid)

0,08 g (0,05 eq.) AIBN, 2,56 g (2,45 eq.) Styrol sowie 6,91 g (6,97 eq.) *N,N-*Dimethylacrylamid wurden in ein 10 mL Reaktionsgefäß aus Glas, versehen mit einem Septum, gegeben. Dieses wurde verschlossen und die Mischung 5 Minuten gerührt. Nachdem das Septum mit einer Nadel zum Entweichen des Stickstoffs perforiert wurde, wurde das Reaktionsgefäß für 8 Stunden bei 65 °C in ein Ultraschallbad gegeben. Danach wurde das Polymer aus dem Reaktionsgefäß entfernt und am Vakuum getrocknet. Ausbeute: 8,24 g (≈ 87 %). *T_{g}* ≈ 122 °C, *Mₙ* = 230,000 g/mol, *Ð* = 5,6. [η₀] = 933 Pa·s. Das Copolymer war geeignet für das Schmelzspinnen.

### Beispiel 4: Poly(styrol)-co-poly(acrylnitril)

0,08 g (0,05 eq.) AIBN, 6,09 g (5,84 eq.) Styrol sowie 3,08g (5,81 eq.) Acrylnitril wurden in ein 10 mL Reaktionsgefäß aus Glas, versehen mit einem Septum, gegeben. Dieses wurde verschlossen und die Mischung 5 Minuten gerührt. Nachdem das Septum mit einer Nadel zum Entweichen des Stickstoffs perforiert wurde, wurde das Reaktionsgefäß für 8 Stunden bei 65 °C in ein Ultraschallbad gegeben. Danach wurde das Polymer aus dem Reaktionsgefäß entfernt und am Vakuum getrocknet. Ausbeute: 8,82 (≈ 96 %). *T_{g}* ≈ 113 °C, *Mₙ* = 140,000 g/mol, *Ð* = 3,4. Das Copolymer war geeignet für das Schmelzspinnen.

### Allgemeine Vorgehensweise zur Herstellung transparenter Faser-Matrix-Komposite auf Basis eines Copolymers und Glasfasergewebes

Die Herstellung des Faser-Matrixkomposits erfolgt in zwei Schritten. In einem ersten Schritt wird das Copolymer mit Hilfe einer Vakuum-Heißpresse in Folienform gepresst. Die Dicke der Folie wird dabei über Distanzen auf einen definierten Wert eingestellt. In einem zweiten Schritt wird das Glasfasergewebe in einer oder mehreren Lagen zwischen zwei dieser Polymerfolien gelegt und mit einer Vakuum-Heißpresse zum finalen Komposit, auf eine definierte Dicke und/oder mit definiertem Druck, gepresst. Konkret wurde wie folgt verfahren:

### Beispiel 5: Herstellung von Polystyrol/Polymethacrylat-Copolymer Matrix-Faser Kompositen mit Glasfasergeweben

9,0 g Poly(styrol)-co-poly(methylmethacrylat) oder Poly(styrol)-*co-*poly(ethylmethacrylat) oder Poly(styrol)-*co*-poly(*N,N-*dimethylacrylamid) oder Poly(styrol)-*co*-poly(acrylnitril) mit geeignetem Brechungsindex wurden zwischen zwei Polyimidfolien (Haufler GmbH, Germany) platziert. Zwei Abstandsbleche aus Stahl (15 x 5 cm x 1,2 mm) wurden am rechten und linken Rand der Pressfläche so positioniert, dass eine Polymerfilmdicke von 1,2 mm erreicht wurde. Die Probe wurde bei 250 °C mit 1,5 bar Druck für 10 min gepresst.

Eine Lage des Glasfasergewebes (n²⁰_{D} = 1,5560, 106 g/m², HexForce - 02116 1260 TF970, EC7 22 Fasern, Wela Handelsgesellschaft GmbH, Deutschland) wurden anschließend zwischen zwei Polymerfolien, die wie oben beschrieben hergestellt wurden, gelegt. Der Verbund wurde zwischen zwei Polyimidfolien platziert um eine glatte Oberfläche zu garantieren. Um die Blasenbildung im finalen Komposit zu verhindern wurde die Presskammer in drei Minuten auf 50 mbar Vakuum evakuiert und anschließend bei 250 °C und 2,3 bar für 15 Minuten unter Vakuum gepresst.

Die so hergestellten Komposite besaßen einen Glasfaseranteil von 1 - 20 Vol.-%. Die mit diesen Kompositen erzielbaren (auf das reine Copolymer normalisierten) Transparenzgrade im Bereich 200 - 800 nm lagen zwischen 70 und 93 %.

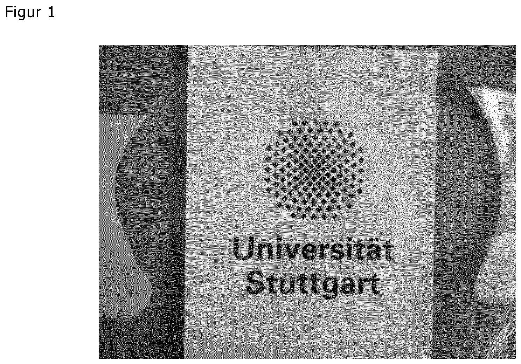

Ein Beispiel für einen entsprechend herstellten Faser-Matrix-Komposit auf der Basis von Glasfasern (E-Glas) und Poly(styrol)-co-poly(ethylmethacrylat) ist in Figur 1 gezeigt. Der Schriftzug hinter dem Komposit ist klar zu erkennen, nicht in die Polymermatrix eingebundene Restfasern mit weißem Erscheinungsbild sind unten rechts in der Abbildung zu sehen.

### Beispiel 6: Struktureller, transparenter Faser-Matrix-Komposit auf Basis eines duroplastischen Epoxidharzes und einem Glasfasergewebe (nicht erfindungsgemäß)

Die *In-situ* Polymerisation in Gegenwart eines Glasfasergewebes (n²⁰_{D} = 1,5560, 106 g/m², HexForce - 02116 1260 TF970, EC7 22 Fasern, Wela Handelsgesellschaft GmbH, Deutschland) wurde mit einem Epoxidharz "Epoxidharz L" und einem Härter "Härter GL2" (R&G Faserverbundwerkstoffe GmbH, Waldenbuch, Deutschland) durchgeführt. In einem ersten Schritt wurden das Harz und der Härter (10:3, Gew./Gew.) unter Vakuum für eine Stunde bei 0,07 bar entgast und gemischt. Die Mischung wurde dann für weitere 30 Minuten bei 0,07 bar entgast.

Die Zusammensetzung von Epoxidharz L ist wie folgt: Bis-[4-(2,3-epoxypropoxy)phenyl]propane, 1,6-Bis(2,3-epoxypropoxy)hexan und Mischung aus 2,2'-[Methylenebis(4,1-phenyleneoxymethylen)]dioxiran, [2-({2-[4-(Oxiran-2-ylmethoxy)benzyl]phenoxy}methyl)oxiran, [2,2'-[Methylenebis(2,1-phenyleneoxy-methylene)]dioxiran
Die Zusammensetzung von Härter GL2 ist wie folgt: Polyoxypropylenediamin, 3-Aminomethyl-3,5,5-trimethylcyclo-hexylamin, 3-Aminopropyltriethoxysilan

Um die für eine optische Transparenz nötige glatte Oberfläche zu generieren, wurden die Glasfasergewebe zugeschnitten, die entsprechende Lagenanzahl für den gewünschten Faservolumenanteil gestapelt und zwischen zwei druckstabile Borsilikatglasplatten, welche durch vier am Rand platzierte 2 mm Stahlliner voneinander getrennt waren, platziert. Die beiden Glasplatten wurden dann mit Dicktband (Tacky Tape) von der Umgebung abgedichtet. Zur Infiltration wurden am oberen und unteren Ende Einlassröhrchen montiert und mit Dichtband LTS90 G abgedichtet.

Die Harzmischung wurde von unten zwischen die beiden Glasplatten in die evakuierte Kavität injiziert und anschließend bei Raumtemperatur für 24 Stunden unter Vakuum gehärtet. Der typischer Füllgrad des Komposits mit Glasfasern lag bei bis zu 60 Vol.-%, was bis zu 29 Gewebelagen entsprach. Der so hergestellte Komposit wurde bei 60 °C für 15 Stunden in einem Ofen nachgehärtet.

### Beispiel 7: Bestimmung der mechanischen Eigenschaften von erfindungsgemäßen Faser-Matrix Kompositen (nicht erfindungsgemäß)

Analog Beispiel 6 wurden Faser-Matrix-Komposite mit unterschiedlichen Gehalten an Glasfasergewebe hergestellt. Dazu wird die jeweilige Faserverstärkung in einem evakuierbaren Hohlraum, der Kavität eines Resin Transfer Moulding (RTM) Werkzeuges eingelegt. Die Fixierung bzw. Klemmung der Fasern erfolgt über rechteckige Dichtband Stücke, welche auf der Vorder- und Rückseite der Faserverstärkung angebracht wurden. Der Hohlraum wurde mit einer Silikondichtschnur von der Umgebung abgedichtet. Die Kavität des RTM-Werkzeuges ist derart ausgelegt, dass sich auf der Unterseite zwischen einem Schlaucheinlass und den Fasern ein faserfreies Volumen befindet, welche zu einer Ausbildung einer linearen Fließfront führt. Über einen mit diesem Schlaucheinlass verbundenen Schlauch wurde ein Harzsystem in den Hohlraum eingeleitet, während der Hohlraum über einen weiteren am oberen Ende des Hohlraums angebrachten Schlauch evakuiert wurde. In Folge der Harzzuleitung bildet sich im faserfreien Volumen eine lineare Fließfront, die bei weiterer Harzzuleitung langsam den Hohlraum ausfüllt, wobei infolge der Infiltration gegen die Schwerkraft Lufteinschlüsse minimiert werden. Die Härtung erfolgte anschließend für 24 h bei RT und 5 bar Kavitätsdruck.

Über das Verfahren wurde eine Reihe von Proben mit unterschiedlichem Anteil an Glasfasergewebe hergestellt (sh. Beispiel 6), wobei der Anteil über die Anzahl an Lagen des Gewebes eingestellt wurde. Die Dicke der Proben lag zwischen 2,7 mm und 3,4 mm. Als Harzsysteme wurden wie in Beispiel 6 eine Mischung von Epoxidharz L+ Härter GL2 im Gew.-Verhältnis 100:30 verwendet.

Für die so hergestellten Proben wurde anschließend die normalisierte Transmission, die Zugfestigkeit (Rm) (gemäß DIN EN ISO 527-4, Typ 3) und die Steifigkeit (E) (gemäß DIN EN ISO 527-4, Typ 3) bestimmt. Die ermittelten Eigenschaften sind in der folgenden Tabelle 1 angegeben:

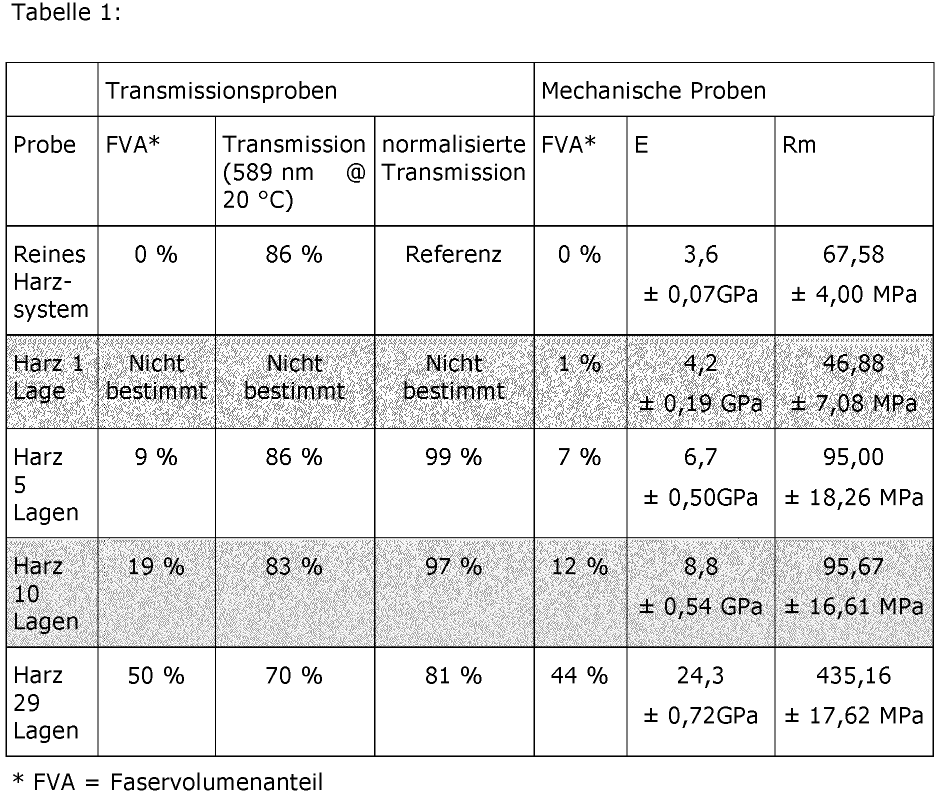

Aus Tabelle 1 wird ersichtlich, dass sich die mechanischen Eigenschaften des Komposits mit zunehmendem Faseranteil deutlich verbessern, so dass bei 29 Lagen eine Steigerung von Zugfestigkeit und Steifigkeit von fast einer Zehnerpotenz erreicht wird. Gleichzeitig wird auch noch bei 29 Glasfasergewebelagen eine Transmission von mehr als 80% erreicht.

## Patentansprüche

1. Transparenter Faser-Matrix-Komposit umfassend Verstärkungsfasern aus einem amorphen Material und einem die Verstärkungsfasern einschließenden Matrixmaterial aus einem amorphen Polymer, wobei das Matrixmaterial einen Siliziumgehalt von weniger als 2 Gew.-% und der transparente Faser-Matrix-Komposit eine normalisierte Transmission, bestimmt bei 589 nm und 20 °C, von mindestens 60 % und einem Faseranteil von 25 bis 60 Vol.-%, bevorzugt mindestens 40 Vol.-%, und weiter bevorzugt 45-55 Vol.-% oder 55-60 Vol.-% aufweist, wobei das amorphe Polymer aus zwei oder mehr Monomeren ausgewählt aus Styrol, Methylmethacrylat, Ethylmethacrylat, Butylmethacrylat, *N*-Vinylpyrrolidon, *N,N*-Dimethylacrylamid, Glycidylmethacrylat, Acrylnitril, Vinylacetat, Methacrylsäure, Methacrylamid, Tetrahydrofurfurylmethacrylat, Isopropenylacetat und Vinylpropionat gebildet ist, wobei das amorphe Polymer ein Copolymer, Terpolymer oder Quaterpolymer ist, dessen Zusammensetzung über das Verhältnis der Monomere aus aromatischen Vinylmonomeren und eines Vinyl- oder Acrylmonomeren so abgestimmt ist, dass sich für das Matrixmaterial und die Verstärkungsfasern angeglichene Brechungsindizes ergeben, die sich um maximal 0,02 unterscheiden.

2. Transparenter Faser-Matrix-Komposit gemäß Anspruch 1, **dadurch gekennzeichnet, dass** die Verstärkungsfaser, bevorzugt als Preform, in Form eines Garns, Hybridgarns oder daraus hergestellten Gelegen, Geweben, Geflechten, Gestricken, Gewirken, Filzen, Vliesen oder Wirrfasernmatten in das Matrixmaterial eingebracht wird.

3. Transparenter Faser-Matrix-Komposit Anspruch 1 oder 2, **dadurch gekennzeichnet, dass** das amorphe Polymer ein zahlenmittleres Molekulargewicht Mn im Bereich von 10,000 bis 1,000,000 g/mol, vorzugsweise von 50,000 bis 500,000 g/mol, und besonders bevorzugt zwischen von 100,000 bis 250,000 g/mol aufweist, wobei das Molekulargewicht mittels GPC über Verwendung geeigneter Standards bestimmt wie im Beispielteil beschrieben wird.

4. Transparenter Faser-Matrix-Komposit gemäß mindestens einem der vorangehenden Ansprüche, **dadurch gekennzeichnet, dass** das amorphe Polymer eine Nullscherviskosität, bestimmt oszillatorisch zwischen 160 °C und 250 °C (gemäß DIN 51810-2) zwischen 100 und 10000 Pa·s, vorzugsweise zwischen 250 und 2500 Pa·s, und besonders bevorzugt zwischen 400 und 1000 Pa·s aufweist.

5. Transparenter Faser-Matrix-Komposit gemäß mindestens einem der vorangehenden Ansprüche, **dadurch gekennzeichnet, dass** das amorphe Polymere eine Glasübergangstemperatur Tg, bestimmt wie im Beispielteil beschrieben mittels DSC, im Bereich von 50 bis 300 °C, vorzugsweise im Bereich von 60 bis 200 °C, und besonders bevorzugt von 80 bis 130 °C aufweist.

6. Verfahren zur Herstellung eines transparenten und bevorzugt strukturellen transparenten Faser-Matrix-Komposits gemäß einem der Ansprüche 1 bis 5, wobei das Verfahren ein Pressen des amorphen Polymers in Gegenwart der Verstärkungsfasern bei einer Temperatur oberhalb der Glasübergangstemperatur des amorphen Polymers umfasst.

7. Verfahren gemäß Anspruch 6, wobei das amorphe Polymer in einem ersten Schritt mit Hilfe einer Heißpresse in Folienform gepresst wird und in einem zweiten Schritt die Verstärkungsfasern in einer oder mehreren Lagen zwischen zwei wie im ersten Schritt hergestellte Polymerfolien gelegt und mit einer Heißpresse unter Vakuum zu einem Komposit gepresst wird.

8. Verfahren gemäß einem der Ansprüche 6 oder 7, wobei das Pressen unter vermindertem Druck, vorzugsweise bei einem Druck von weniger als 200 mbar, weiter bevorzugt weniger als 50 mbar und noch weiter bevorzugt weniger als 10 mbar durchgeführt wird, wobei das Gemisch aus Verstärkungsfasern und einem der mehreren monomeren und/oder oligomeren Vorläufern des amorphen Polymers oder die jeweiligen Einzelkomponenten bei einem solchen Druck entgast werden.

9. Verwendung eines strukturellen, transparenten Faser-Matrix-Komposits gemäß mindestens einem der Ansprüche 1 bis 5 als strukturelle transparente Scheibe mit ballistischem Schutz.

## Claims

1. A transparent fiber-matrix composite, comprising reinforcing fibers made of an amorphous material and a matrix material made of an amorphous polymer, the matrix material including said reinforcing fibers, wherein the matrix material has a silicon content of less than 2 % by weight, and the transparent fiber-matrix composite has a normalized transmission, determined at 589 nm and 20°C, of at least 60%, and a fiber content of 25 to 60% by volume, preferably at least 40% by volume and more preferably of 45-55% by volume or 55-60% by volume, wherein the amorphous polymer is formed from two or more monomers selected from styrene, methyl methacrylate, ethyl methacrylate, butyl methacrylate, *N*-vinylpyrrolidone, N,N-dimethylacrylamide, glycidyl methacrylate, acrylonitrile, vinyl acetate, methacrylic acid, methacrylamide, tetrahydrofurfuryl methacrylate, isopropenyl acetate and vinyl propionate, wherein the amorphous polymer is a copolymer, terpolymer or quaterpolymer, the composition of which is adjusted via the ratio of the monomers of aromatic vinyl monomers and a vinyl or acrylic monomer in such a way that the matrix material and the reinforcing fibers have matching refractive indices which differ by 0.02 at most.

2. The transparent fiber-matrix composite according to claim 1, **characterized in that** the reinforcing fiber, preferably as a preform, is introduced into the matrix material in the form of a yarn, hybrid yarn, or in the form of fabrics, woven fabrics, braided fabrics, knitted fabrics, warp-knitted fabrics, felts, non-wovens or random fiber mats produced from said yarns.

3. The transparent fiber-matrix composite of claim 1 or 2, **characterized in that** the amorphous polymer has a number-average molecular weight Mn in the range from 10,000 to 1,000,000 g/mol, preferably from 50,000 to 500,000 g/mol, and particularly preferably between 100,000 and 250,000 g/mol, wherein the molecular weight is determined by GPC using suitable standards as described in the example part.

4. The transparent fiber-matrix composite according to at least any one of the preceding claims, **characterized in that** the amorphous polymer has a zeroshear viscosity, determined by oscillation between 160°C and 250°C (according to DIN 51810-2) of between 100 and 10,000 Pa·s, preferably between 250 and 2,500 Pa·s, and particularly preferably between 400 and 1,000 Pa·s.

5. The transparent fiber-matrix composite according to at least one of the preceding claims, **characterized in that** the amorphous polymer has a glass transition temperature Tg, determined as described in the example part by means of DSC, in the range from 50 to 300°C, preferably in the range from 60 to 200°C, and particularly preferably from 80 to 130°C.

6. A method for producing a transparent and preferably structurally transparent fiber-matrix composite according to any one of claims 1 to 5, wherein the method comprises pressing the amorphous polymer in the presence of the reinforcing fibers at a temperature above the glass transition temperature of the amorphous polymer.

7. The method according to claim 6, wherein the amorphous polymer is pressed into a film form in a first step with the aid of a hot press, and in a second step, the reinforcing fibers are placed in one or more layers between two polymer films produced as in the first step, and pressed with a hot press under vacuum to form a composite.

8. The method according to any one of claims 6 or 7, wherein the pressing is carried out under reduced pressure, preferably at a pressure of less than 200 mbar, more preferably less than 50 mbar, and still more preferably less than 10 mbar, wherein the mixture of reinforcing fibers and one of the plurality of monomeric and/or oligomeric precursors of the amorphous polymer, or the respective individual components are degassed at such a pressure.

9. A use of a structural, transparent fiber matrix composite according to at least any one of claims 1 to 5 as a structural transparent pane with ballistic protection.

## Revendications

1. Composite fibres-matrice transparent comprenant des fibres de renforcement composées d'un matériau amorphe et d'un matériau matriciel en un polymère amorphe renfermant les fibres de renforcement, dans lequel le matériau matriciel présente une teneur en silicium inférieure à 2 % en poids et le composite fibres-matrice transparent présente une transmission normalisée, définie à 589 nm et à 20 °C, d'au moins 60 % et pour une teneur en fibres de 25 à 60 % en vol., de manière préférée d'au moins 40 % en vol., et de manière davantage préférée de 45-55 % en vol. ou de 55-60 % en vol., dans lequel le polymère amorphe est formé à partir de deux monomères ou plus choisis parmi le styrène, le méthacrylate de méthyle, le méthacrylate d'éthyle, le méthacrylate de butyle, la N-vinylpyrrolidone, le N,N-diméthylacrylamide, le méthacrylate de glycidyle, l'acrylonitrile, l'acétate de vinyle, l'acide méthacrylique, le méthacrylamide, le méthacrylate de tétrahydrofurfuryle, l'acétate d'isopropényle et le propionate de vinyle, dans lequel le polymère amorphe est un copolymère, un terpolymère ou un quaterpolymère dont la composition est adaptée par l'intermédiaire du rapport des monomères composés de monomères vinyliques aromatiques et d'un monomère vinylique ou acrylique de telle sorte qu'en résultent pour le matériau matriciel et les fibres de renforcement des indices de réfraction ajustés qui diffèrent de 0,02 au maximum.

2. Composite fibres-matrice transparent selon la revendication 1, **caractérisé en ce que** les fibres de renforcement sont introduites dans le matériau matriciel, de manière préférée en tant que préforme, sous la forme d'un fil, d'un fil hybride, ou de nappes, de tissus, de tressages, de tricots, de tissus à mailles, de feutres, de tissés ou de nattes de fibres enchevêtrées fabriqués à partir de ceux-ci.

3. Composite fibres-matrice transparent selon la revendication 1 ou 2, **caractérisé en ce que** le polymère amorphe présente un poids moléculaire moyen Mn dans la plage de 10 000 à 1 000 000 g/mol, de préférence de 50 000 à 500 000 g/mol et de manière particulièrement préférée de 100 000 à 250 000 g/mol, dans lequel le poids moléculaire est défini par GPC (chromatographie par perméation de gel) par l'utilisation de normes adaptées ainsi que cela est décrit dans la partie des exemples.

4. Composite fibres-matrice transparent selon au moins l'une des revendications précédentes, **caractérisé en ce que** le polymère amorphe présente une viscosité à cisaillement nul, définie par oscillations entre 160 °C et 250 °C (selon la norme DIN 51810-2) entre 100 et 10 000 Pa·s, de préférence entre 250 et 2500 Pa·s, et de manière particulièrement préférée entre 400 et 1000 Pa·s.

5. Composite fibres-matrice transparent selon au moins l'une des revendications précédentes, **caractérisé en ce que** le polymère amorphe présente une température de transition vitreuse Tg, définie ainsi que cela est décrit dans la partie des exemples, par DSC (calorimétrie différentielle à balayage), dans la plage de 50 à 300 °C, de préférence dans la plage de 60 à 200 °C, et de manière particulièrement préférée de 80 à 130 °C.

6. Procédé de fabrication d'un composite fibres-matrice transparent et de manière préférée transparent structurel selon l'une des revendications 1 à 5, dans lequel le procédé comprend un pressage du polymère amorphe en présence des fibres de renforcement à une température supérieure à la température de transition vitreuse du polymère amorphe.

7. Procédé selon la revendication 6, dans lequel le polymère amorphe est pressé dans une première étape à l'aide d'une presse à chaud sous forme de film et, dans une deuxième étape, les fibres de renforcement sont placées en une ou plusieurs couches entre deux films de polymère fabriqués comme dans la première étape et sont pressées en un composite sous vide avec une presse à chaud.

8. Procédé selon l'une des revendications 6 ou 7, dans lequel le pressage est mis en œuvre sous une pression réduite, de préférence à une pression inférieure à 200 mbar, de manière davantage préférée inférieure à 50 mbar et de manière encore davantage préférée inférieure à 10 mbar, dans lequel le mélange composé de fibres de renforcement et d'un ou de plusieurs précurseurs monomères et/ou oligomères du polymère amorphe ou les composants individuels respectifs sont dégazés à une pression de ce type.

9. Utilisation d'un composite fibres-matrice transparent structurel selon au moins l'une des revendications 1 à 5 en tant que disque transparent structurel avec une protection balistique.
